# EUROPÄISCHE PATENTSCHRIFT

(11) **EP 0 765 729 B1**
(45) Veröffentlichungstag und Bekanntmachung des Hinweises auf die Patenterteilung: **29.08.2001**
(21) Anmeldenummer: 96115003.4
(22) Anmeldetag: 19.09.1996
(51) Int. Cl.: B29C 47/60

(54) **Teil-Schneckenwelle für eine Schneckenmaschine und Verfahren zu ihrer Herstellung**
Screw element for screw extruder and method for making the same
Segment de vis pour extrudeuse et méthode de fabrication

(30) Priorität: 30.09.1995 DE 19536677
(43) Veröffentlichungstag der Anmeldung: 02.04.1997
(73) Patentinhaber: Coperion Werner & Pfleiderer GmbH & Co. KG, 70469 Stuttgart (DE)
(72) Erfinder: Heidemeyer, Peter, Dr.-Ing., 70437 Stuttgart (DE); Wuttke, Reinhard, Dipl.-Ing., 70374 Stuttgart (DE); Wörz Wolfgang, 75428 Illingen (DE)
(74) Vertreter: Rau, Manfred, Dr. Dipl.-Ing.

(56) Entgegenhaltungen:
- EP-A- 0 546 281
- DE-A- 1 779 711
- DE-A- 4 328 160
- US-A- 4 167 339
- PATENT ABSTRACTS OF JAPAN vol. 013, no. 041 (M-791), 30.Januar 1989 & JP-A-63 251220 (ISHIKAWAJIMA HARIMA HEAVY IND CO LTD), 18.Oktober 1988,
- PATENT ABSTRACTS OF JAPAN vol. 016, no. 187 (M-1244), 7.Mai 1992 & JP-A-04 025429 (MITSUBISHI HEAVY IND LTD), 29.Januar 1992,

## Beschreibung

Die Erfindung betrifft eine Teil-Schneckenwelle für eine Schneckenmaschine gemäß dem Oberbegriff des Anspruchs 1 sowie ein Verfahren zu deren Herstellung.

Aus der DE-AS 12 14 386 ist es bekannt, Schnecken-Wellen für zwei- oder mehrwellige Schneckenmaschinen in der Weise herzustellen, daß auf eine Welle Schneckensatz-Elemente aufgeschoben werden, die stirnseitig von beiden Enden der Welle her festgelegt werden. Bei diesen Schneckensatz-Elementen handelt es sich um Schnecken-Elemente, die primär einen Einzugsabschnitt einer Einzugszone der Schneckenmaschine bilden. Hieran schließen sich weitere Elemente, beispielsweise Knetscheiben, an, die einen Aufschmelzabschnitt einer Aufschmelzzone bilden. Daran schließt sich in der Regel ein rückwärtsförderndes Rückstauelement an, mit dem die Verweilzeit des aufzubereitenden Materials in der Aufschmelzzone beeinflußt wird. Danach kommen Schnecken-Elemente eines Entgasungs- und Homogenisier-Abschnitts. Die einzelnen Schneckensatz-Elemente sind drehfest auf der Welle festgelegt und zwar beispielsweise mittels Nut-Paßfeder-Verbindung oder Mehrkant-, beispielsweise 6-Kant-Verbindung oder mittels ineinandergreifender Evolventenverzahnung. Die bekannte Ausgestaltung hat den Vorteil, daß es leicht möglich ist, durch Änderung der einzelnen Schneckensatz-Elemente eine Anpassung der Schneckenwelle an jeweils unterschiedliche Verfahrensbedingungen vorzusehen. Außerdem können einzelne Schneckensatz-Elemente bei Verschleiß leicht ausgetauscht werden. Ein Nachteil dieser bekannten Ausgestaltung ist, daß das maximal zulässige Drehmoment vom Durchmesser der Welle bestimmt wird, da die Schneckensatz-Elemente kein Drehmoment vom Antrieb her übertragen.

Es wurde festgestellt, daß der Einzugsabschnitt einer Schneckenwelle etwa 5 % des Gesamtdrehmoments und der Aufschmelz-Abschnitt etwa 80 % überträgt. Der Einzugs- und Aufschmelz-Abschnitt überträgt also etwa 85 % des insgesamt an der Schneckenwelle angreifenden Drehmoments.

Aus der US-PS 2 662 243 ist es bereits bekannt, eine Schneckenwelle aus zwei Schneckenwellen-Abschnitten herzustellen, die mittels einer Schneckenwellen-Kupplung miteinander verbunden werden.

Aus der DE 43 28 160 A1 ist eine Schneckenwelle einer Schneckenstrangpresse bekannt, die einen schmelzmetallurgisch hergestellten Stahlkern aufweist, der zur Übertragung des Drehmoments ausgelegt ist. Sie weist weiterhin einen Schneckenstegträger mit mindestens einem Schneckensteg auf, die monometallisch durch heißisostatisches Pressen aus Metallpulver hergestellt und korrosionsfest sowie verschleißfest eingestellt sind. Sie weist weiterhin eine Schneckensteg-Stirnschicht auf, die durch heißisostatisches Pressen aus Metallpulver hergestellt und korrosionsfester sowie verschleißfester ist als der Schneckenstegträger mit dem Schneckensteg. Der Stahlkern und der Schneckenstegträger sowie der Schneckenstegträger und die Schneckensteg-Stirnschicht sind jeweils durch heißisostatisches Pressen unter Bildung einer Diffusionsschicht miteinander verbunden. Damit soll eine Schneckenwelle mit verhältnismäßig geringem Fertigungsaufwand hergestellt werden. Das eingangs geschilderte Problem der Drehmomentübertragung bleibt.

Der Erfindung liegt die Aufgabe zugrunde, eine Teil-Schneckenwelle und ein Verfahren zu ihrer Herstellung so auszugestalten, daß in einfacher Weise eine Teil-Schneckenwelle hergestellt werden kann, die ein besonders hohes Drehmoment übertragen kann.

Diese Aufgabe wird erfindungsgemäß durch die Merkmale im Anspruch 1 bzw. im Anspruch 2 gelöst. Durch die erfindungsgemäßen Maßnahmen erhält die Teil-Schneckenwelle im Bereich der Einzugs- und Aufschmelzzone einer Schneckenmaschine die Struktur einer Vollschnecke, da auch die Schneckensatz-Elemente zur Leistungs- und damit Drehmomentübertragung dienen. Die maximal mögliche Erhöhung der Drehmoment-Belastbarkeit liegt zwischen 50 bis maximal 500 %. Die Schneckensatz-Elemente können exakt den konkreten Einsatzbedürfnissen für eine spezielle Schneckenmaschine angepaßt werden und zwar hinsichtlich geometrischer Gestaltung, Verschleißfestigkeit, Korrosionsfestigkeit und dergleichen. Die anzuschließende, einen Entgasungs- und Homogenisierungs-Abschnitt bildende Teil-Schneckenwelle kann mittels eines Kupplungs-Wellenzapfens in bekannter Weise derart ausgebildet werden, daß die einzelnen Schneckensatz-Elemente auf eine Welle aufgeschoben werden, die wegen der geringen Drehmomentenbelastungen in diesem Bereich nicht mit der Welle fest verbunden werden müssen.

Vorteilhafte Ausgestaltungen ergeben sich aus den Unteransprüchen.

Weitere Merkmale, Vorteile und Einzelheiten der Erfindung ergeben sich aus der nachfolgenden Beschreibung zweier Ausführungsbeispiele anhand der Zeichnung. Es zeigt
- Fig. 1: eine Teil-Schneckenwelle in vormontiertem Zustand in einer Kapsel einer HIP-Anlage und
- Fig. 2: eine abgewandelte Ausführungsform einer Teil-Schneckenwelle in vormontiertem Zustand in der Kapsel der HIP-Anlage.

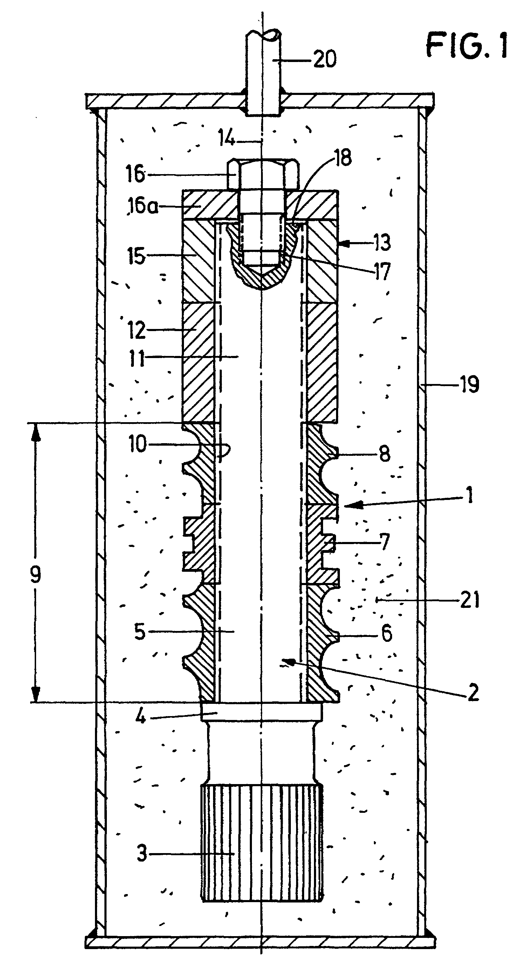

In Fig. 1 ist eine Teil-Schneckenwelle 1 einer Schneckenwelle für eine übliche zweiwellige Schneckenmaschine dargestellt, die für die Kunststoffaufbereitung eingesetzt wird. In einer solchen Schneckenmaschine werden die beiden Schneckenwellen gleichsinnig drehend angetrieben.

Die Teil-Schneckenwelle 1 weist eine Welle 2 auf, die an einem Ende einen Getriebe-Kupplungszapfen 3 aufweist, mit dem in üblicher Weise die Schneckenwelle an ein einem Antriebsmotor nachgeschaltetes Getriebe gekuppelt wird. An den Getriebe-Kupplungszapfen 3 schließt sich ein Anlagebund 4 an, von dem sich ein Wellenabschnitt 5 erstreckt, der zur Aufnahme von in ihrer äußeren Konfiguration üblichen Schneckensatz-Elementen dient. An den Anlagebund 4 schließt sich ein Schnecken-Element 6 an. Hierauf folgen Knetscheiben 7, denen wiederum ein Schneckenelement 8 folgt Diese Schneckenelemente 6, Knetscheiben 7 und Schneckenelemente 8 bilden als Schneckensatz-Elemente einen Einzugs- und Aufschmelz-Abschnitt 9 einer Einzugs- und Aufschmelzzone einer Schneckenmaschine. In der Regel sind die Schneckenelemente 6 zur Bildung einer entsprechend langen Einzugszone länger ausgebildet, worauf es für die Beschreibung aber nicht ankommt.

Der Wellenabschnitt 5 und entsprechend die Schneckenelemente 6, 8 und Knetscheiben 7 sind mit einer Nut-Paßfeder- oder einer Mehrkant-Profil-Verbindung oder mit ineinandergreifenden Evolventen-Verzahnungen 10 formschlüssig drehfest miteinander verbunden. Der Wellenabschnitt 5 steht über den Einzugs- und Aufschmelz-Abschnitt 9 noch mit einem Kupplungs-Wellenzapfen 11 vor, mittels dessen eine weitere Teil-Welle anschließbar ist, auf die Schneckenelemente zur Bildung einer Entgasungs- und Homogenisier-Zone in einer Schneckenmaschine aufschiebbar sind. Auf den Kupplungs-Wellenzapfen 11 wird eine Distanzhülse 12 aufgeschoben, die vollständig oder aber zumindest an ihrer Innenseite aus einem keramischen Material besteht, so daß beim späteren Diffusionsschweißen keine Verbindung mit der Welle 2 hergestellt wird. Die Innenseite der Distanzhülse 12 ist bevorzugt mit Cᵣ₂O₃ beschichtet. Die Distanzhülse 12 wird mit einer Spannvorrichtung 13 in Richtung der Mittel-Längs-Achse 14 der Welle 2 belastet. Die Spannvorrichtung 13 weist eine gegen die Distanzhülse 12 anliegende Spannhülse 15 auf, die mittels einer Spannschraube 16 mit Spannscheibe 16a verspannt wird. Diese Spannschraube 16 greift in eine zentrische Sackloch-Gewindebohrung 17 in der Stirnseite 18 der Welle 2 ein. Die Auswahl der Werkstoffe der Welle 2 einerseits und der Schnekkenelemente 6, 8 und der Knetscheibe 7 und der Distanzhülse 12 und der Spannvorrichtung 14 andererseits und die Vorspannung selber werden so gewählt, daß auch bei den Diffusions-Schweißtemperaturen von bis zu 1200°C die Schneckenelemente 6, 8 und die Knetscheiben 7 gegen die Welle 2 verspannt bleiben. Die Schneckenelemente 6, 8 und die Knetscheibe 7 sitzen radial und tangential spielfrei auf dem Wellenabschnitt 5.

Die geschilderte Teil-Schneckenwelle 1 mit der Spannvorrichtung 13 wird in eine gasdichte Kapsel 19 einer HIP-Anlage gebracht, wobei HIP für Heiß-Isostatisches-Pressen steht. Die als Einwegkapsel ausgebildete Kapsel 19 weist einen Rohranschluß 20 zum Evakuieren und zum Füllen mit einem Druckübertragungsmittel 21 auf. Bei letzterem handelt es sich üblicherweise um hochschmelzendes Pulver, z.B. Al₂O₃ oder SiO₂ mit Korngrößen < 500 *µ*m und Fülldichten > 50 %, die durch Rütteln erzielt werden. Die Fülldichte ist definiert durch die Dichte der geschütteten Körner bezogen auf die Dichte des Materials selber. In der evakuierten und mit Druckübertragungsmittel 21 vollständig gefüllten Kapsel 19 wird die in der geschilderten Weise montierte Teil-Schneckenwelle 1 in einer HIP-Anlage einem Gasdruckdiffusionsschweißprozeß unterzogen, wobei die Temperatur im allgemeinen bei dem 0,5- bis 0,8-fachen der absoluten Temperatur des Schmelzpunktes des niedrigstschmelzenden Bauteils, im geschilderten Anwendungsfall also üblicherweise kleiner 1200°C ist. Das Gasdruckdiffusionsschweißen erfolgt mit einem von außen auf die Kapsel 19 aufgebrachten Gasdruck kleiner 1500 bar und einer Haltezeit von 0,5 bis 3 Stunden in einem Hochdruck-Autoklaven. Die minimale Haltezeit in der mit Druckübertragungsmittel 21 geführten Kapsel 19 muß für unterschiedliche Anwendungsfälle jeweils ermittelt werden. Es ist ausreichend, die TeilSchneckenwelle 1 nur so lange in der Kapsel 19 zu halten, bis die Außenkontur der Teil-Schneckenwelle 1 gasdicht ist. Dann kann die Teil-Schneckenwelle 1 aus der Kapsel 19 entnommen werden. Um eine ausreichend große Diffusionstiefe zu erreichen, kann dann ohne die Kapsel 19 in der HIP-Anlage der Diffusionsschweißvorgang fortgesetzt werden.

Am Ende des Diffusionsschweißvorganges wird die Spannvorrichtung 13 von der Teil-Schneckenwelle 1 gelöst. Soweit Druckübertragungsmittel 21 sich mit der metallischen Oberfläche der Schneckensatz-Elemente infolge Druck und Temperatur während des HIP-Prozesses durch eine Form der mechanischen Verklammerung verbunden hat, wird dies durch Sandstrahlen wieder entfernt. Die Schneckensatz-Elemente, nämlich die Schneckenelemente 6, 8 und die Knetscheiben 7 sind in Achsrichtung untereinander und mit dem Wellenabschnitt 5 vollständig und vollflächig verbunden, so daß die Teil-Schneckenwelle 1 gleichsam eine Vollwelle ist, andererseits aber die Schneckensatz-Elemente aus anderem, insbesondere hochverschleißfestem, Material bestehen können, als die Welle 2.

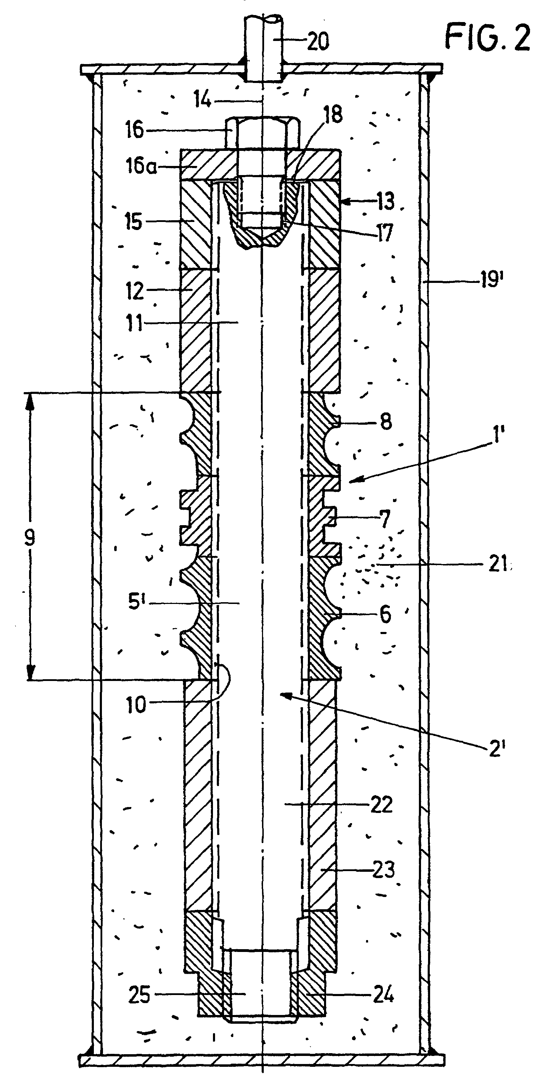

Das Ausführungsbeispiels nach Fig. 2 unterscheidet sich von dem nach Fig. 1 nur dadurch, daß die Welle 2' nicht einstückig mit einem Getriebe-Kupplungszapfen und einem Anlagebund 4 vor dem Wellenabschnitt 5 versehen ist, sonden daß die Welle 2' durchgehend ausgebildet ist und zwar mit einer Nut für die Nut-Paßfeder-Verbindung oder einem Mehrkantprofil oder einer Evolventen Verzahnung. In diesem Fall wird ein für einen Getriebe-Kupplungszapfen vorgesehenen Teil-Wellen-Abschnitt 22 des Wellenabschnitts 5' mit einer wie die Distanzhülse 12 aufgebrachten Distanzhülse 23 abgedeckt, gegen die die Schneckenelemente 6 anliegen. Am Ende des Teil-Wellenabschnitts 22 wird ein Spann-Widerlager 24 auf einem Gewindezapfen 25 des Teil-Wellenabschnitts 22 festgelegt, so daß das axiale Verspannen der Schneckensatz-Elemente auf der Welle 2' möglich ist. Der sonstige Aufbau und das Verfahren ist identisch dem zu Fig. 1 beschriebenen, so daß von einer erneuten Beschreibung Abstand genommen werden kann, wobei konstruktiv leicht abgewandelte Teile in Fig. 2 mit derselben Bezugsziffer mit einem hochgesetzten ' bezeichnet werden.

## Patentansprüche

1. Teil-Schneckenwelle für eine Schneckenmaschine
a) mit einer Welle (2; 2')
i) mit einer Mittel-Längs-Achse (14),
ii) mit einem ersten Ende und einem zweiten Ende und
iii) mit einem an dem ersten Ende der Welle (2; 2') vorgesehenen Getriebe-Kupplungszapfen (3) zur Kupplung der Welle (2; 2') an ein einem Antriebsmotor nachgeschaltetes Getriebe und
b) mit Schneckensatz-Elementen (6, 7, 8),
i) die mit der Welle (2; 2') formschlüssig verbunden sind und
ii) die Schneckenelemente (6) an einem Einzugs-Abschnitt aufweisen, die dem Getriebe-Kupplungszapfen (3) in Richtung auf das zweite Ende der Welle (2; 2') nachgeordnet sind, **dadurch gekennzeichnet**, daß
c) die Schneckensatz-Elemente (6, 7, 8) Knetscheiben (7) an einem Aufschmelz-Abschnitt aufweisen, die den Schneckenelementen (6) in Richtung auf das zweite Ende der Welle (2; 2') nachgeordnet sind,
d) die Schneckensatz-Elemente (6, 7, 8) mit der Welle (2; 2') sowie untereinander mittels Gasdruckdiffusionsschweißens verbunden sind und
e) die Welle (2; 2') einen den Knetscheiben (7) in Richtung auf das zweite Ende nachgeordneten Kupplungs-Wellenzapfen (11) zur Verbindung mit einer weiteren Teil-Schneckenwelle aufweist.

2. Verfahren zur Herstellung einer Teil-Schneckenwelle für eine Schneckenmaschine, mit folgenden Verfahrensschritten:
a) eine Welle (2; 2') mit einer Mittel-Längs-Achse (14) sowie einem ersten Ende und einem zweiten Ende wird eingesetzt,
b) Schneckensatz-Elemente (6, 7, 8), umfassend Schneckenelemente (6) und Knetscheiben (7), für einen Einzugs- und Aufschmelz-Abschnitt (9) werden nacheinander auf die Welle (2; 2') aufgeschoben und in Richtung zum ersten Ende der Welle (2; 2') gegen einen Anschlag (4; 23) festgelegt,
c) die Schneckensatz-Elemente (6, 7, 8) werden vom zweiten Ende der Welle (2; 2') her in Richtung der Achse (14) gegen den Anschlag (4; 23) verspannt,
d) die vormontierte Teil-Schneckenwelle wird in eine Kapsel (19) einer Heiß-Isostatischen-Preß-Anlage eingebracht und einem Gasdruckdiffusionsschweißprozeß unterworfen, wobei die Berührungsflächen zwischen der Welle (2; 2') und den Schneckensatz-Elementen (6, 7, 8) sowie die Berührungsflächen einander benachbarter Schneckensatz-Elemente (6, 7, 8) miteinander verschweißt werden.

3. Verfahren nach Anspruch 2, wobei eine Welle (2) mit einem Getriebe-Kupplungszapfen (3) mit Anschlagbund (4) zur Anlage eines Schneckensatz-Elementes (6) eingesetzt wird, wobei die einander liegenden Stirnseiten des Anlagebundes (4) und des Schneckensatz-Elementes (6) miteinander verschweißt werden.

4. Verfahren nach Anspruch 2, wobei eine Welle (2') mit einem Teil-Wellenabschnitt (22) für einen Getriebe-Kupplungszapfen (3) eingesetzt wird und wobei der Teil-Wellenabschnitt (22) mit einer Distanzhülse (23) abgedeckt wird, der gegen ein mit dem Teil-Wellenabschnitt (22) lösbar verbundenes Spann-Widerlager (24) anliegt.

5. Verfahren nach einem der Ansprüche 2 oder 3, wobei eine Spannvorrichtung (13) an dem dem Anschlag (4, 23) entgegengesetzt angeordneten Kupplungs-Wellenzapfen (11) befestigt wird.

## Claims

1. A partial screw shaft for a screw extruder, comprising
a) a shaft (2; 2'), which has
i) central longitudinal axis (14),
ii) a first end and a second end, and
iii) a gear coupling pin (3), which is provided on the first end of the shaft (2; 2'), coupling the shaft (2; 2') to a gear that is disposed downstream of a driving motor; and
b) screw components (6, 7, 8),
i) which are positively joined to the shaft (2; 2'), and
ii) have screws (6) on a feed section, the screws (6) being disposed downstream of the gear coupling pin (3) in the direction toward the second end of the shaft (2; 2'), **characterized**
c) in that the screw components (6, 7, 8) comprise kneading disks (7) on a melting section, which are disposed downstream of the screws (6) in the direction toward the second end of the shaft (2; 2');
d) in that the screw components (6, 7, 8) are joined to the shaft (2; 2') as well as to each other by means of gas pressure diffusion welding; and
e) in that the shaft (2; 2') comprises a coupling shaft pin (11), which is disposed downstream of the kneading disks (7) in the direction toward the second end, serving for the connection with another partial screw shaft.

2. A method of producing a partial screw shaft for a screw extruder, comprising the following steps:
a) a shaft (2; 2') is inserted, which has a central longitudinal axis (14) as well as a first end and a second end;
b) screw components (6, 7, 8), which comprise screws (6) and kneading disks (7) for a feed- and a melting-section (9), are placed successively on the shaft (2; 2') and fixed against a stop (4; 23) in the direction toward the first end of the shaft (2; 2');
c) the screw components (6, 7, 8) are clamped against the stop (4; 23) from the second end of the shaft (2; 2') in the direction of the axis (14);
d) the pre-assembled partial screw shaft is inserted into a case (19) of a hot isostatic pressing facility and subjected to a process of gas pressure diffusion welding, with the surfaces of contact of the shaft (2; 2') with the screw components (6, 7, 8) as well as the surfaces of contact of neighboring screw components being welded together.

3. A method according to claim 2, wherein a shaft (2) is inserted, having a gear coupling pin (3) with a stop collar (4) for a screw component (6) to bear against, with the fronts, which bear against each other, of the stop collar (4) and the screw component (6) being welded together.

4. A method according to claim 2, wherein a shaft (2') is inserted, having a partial shaft section (22) for a gear coupling pin (3), and wherein the partial shaft section (22) is covered by a spacing sleeve (23), which bears against a clamping abutment (24) that is releasably joined to the partial shaft section (22).

5. A method according to one of claims 2 or 3, wherein a clamping device (13) is fixed on the coupling shaft pin (11) that is opposite to the stop (4, 23).

## Revendications

1. Arbre partiel de vis pour une machine à vis, comportant
a) un arbre (2 ; 2')
i) un axe longitudinal médian (14),
ii) une première et une deuxième extrémité, et
iii) un tourillon (3) de couplage de transmission prévu sur la première extrémité de l'arbre (2 ; 2') pour le couplage de l'arbre (2 ; 2') à une transmission disposée en aval d'un moteur d'entraînement, et
b) des éléments de jeu de vis (6, 7, 8),
i) qui sont reliés à l'arbre (2 ; 2') par complémentarité de forme, et
ii) qui comportent des éléments de vis (6) au niveau d'une section d'entrée, lesquels sont disposés en direction de la deuxième extrémité de l'arbre (2 ; 2') en aval du tourillon (3) de couplage de transmission,
**caractérisé en ce que**
c) les éléments du jeu de vis (6, 7, 8) comportent sur une section de fusion des disques malaxeurs (7), qui sont disposés en direction de la deuxième extrémité de l'arbre (2 ; 2') en aval des éléments de vis (6),
d) les éléments du jeu de vis (6, 7, 8) sont reliés à l'arbre (2 ; 2'), ainsi qu'entre eux, au moyen d'un soudage par diffusion sous pression de gaz, et
e) l'arbre (2 ; 2') comporte un tourillon (11) de couplage d'arbre destiné à la liaison avec un autre arbre partiel de vis, lequel est disposé en direction de la deuxième extrémité en aval des disques malaxeurs (7).

2. Procédé de fabrication d'un arbre partiel de vis pour une machine à vis, avec les phases de procédé suivantes :
a) il est utilisé un arbre (2 ; 2') comportant un axe longitudinal médian (14), ainsi qu'une première et une deuxième extrémité,
b) des éléments d'un jeu de vis (6, 7, 8), englobant des éléments de vis (6) et des disques malaxeurs (7) destinés à une section d'entrée et de fusion (9), sont emmanchés successivement sur l'arbre (2 ; 2'), et bloqués en direction de la première extrémité de l'arbre (2 ; 2') contre une butée (4 ; 23),
c) les éléments du jeu de vis (6, 7, 8) sont bloqués contre la butée (4 ; 23) à partir de la deuxième extrémité de l'arbre (2 ; 2') en direction de l'axe (14),
d) l'arbre partiel de vis préalablement monté est introduit dans une capsule (19) d'une installation de compression isostatique à haute température, et soumis à un processus de soudage par diffusion sous pression de gaz, les surfaces de contact entre l'arbre (2 ; 2') et les éléments du jeu de vis (6, 7, 8); ainsi que les surfaces de contact d'éléments du jeu de vis (6, 7, 8) voisins les uns des autres, étant soudées entre elles.

3. Procédé suivant la revendication 2, dans lequel un arbre (2), comportant un tourillon (3) de couplage de transmission avec une collerette de butée (4), est utilisé pour la mise en appui d'un élément du jeu de vis (6), les faces frontales opposées de la collerette de butée (4) et de l'élément du jeu de vis (6) étant soudées entre elles.

4. Procédé suivant la revendication 2, dans lequel il est utilisé un arbre (2') comportant un segment partiel (22) d'arbre pour un tourillon (3) de couplage de transmission, le segment partiel (22) d'arbre étant recouvert par une douille d'écartement (23) qui prend appui contre une butée de serrage (24) reliée de façon amovible au segment partiel (22) d'arbre.

5. Procédé suivant la revendication 2 ou 3, dans lequel un dispositif de serrage (13) est fixé sur le tourillon (11) de couplage d'arbre opposé à la butée (4, 23).
